Europäisches Patentamt

(19) European Patent Office

Office européen des brevets

(11) Publication number: **0 271 130 B1**

(12) **EUROPEAN PATENT SPECIFICATION**

(45) Date of publication of patent specification: **06.05.92**  (51) Int. Cl.⁵: **F02B 29/00**

(21) Application number: **87202197.7**

(22) Date of filing: **11.11.87**

(54) **Four-stroke combustion engine with supercharging and method for operation thereof.**

(30) Priority: **11.11.86 NL 8602858**

(43) Date of publication of application:
**15.06.88 Bulletin 88/24**

(45) Publication of the grant of the patent:
**06.05.92 Bulletin 92/19**

(84) Designated Contracting States:
**AT BE CH DE ES FR GB GR IT LI LU NL SE**

(56) References cited:
DE-C- 751 098          DE-C- 962 764
GB-A- 202               GB-A- 338 560
GB-A- 560 735           NL-A- 7 802 328
NL-C- 7 599

SOVIET INVENTIONS ILLUSTRATED, section
O, week 8644, 13th November 1986, page 52,
no. 86-290112/44; & SU-A-1 216 389
(KOLOMENKO CORRESP P) 07-03-1986

PATENT ABSTRACTS OF JAPAN, vol. 10, no.
291 (M-522)[2347], 3th October 1986; & JP-
A-61 106921 (MITSUBISHI HEAVY IND., LTD)
24-05-1986

PATENT ABSTRACTS OF JAPAN, vol. 7, no.
89 (M-207)[1234], 13rd April 1983; & JP-A-58
13 123 (DAIHATSU KOGYO K.K.) 25-01-1983

PATENT ABSTRACTS OF JAPAN, vol. 7, no.
95 (M-209)[1240], 21st April 1983; & JP-A-58
18 517 (SHIYUUICHI KITAMURA) 03-02-1983

(73) Proprietor: **Stork-Wärtsilä Diesel B.V.**
**No. 5, Assendorperlure**
**NL-8017 AA Zwolle(NL)**

(72) Inventor: **Heidemans, Jacob**
**Wilhelminastraat 13**
**NL-4194 TT Meteren(NL)**
Inventor: **Hakstege, Abraham Wessel**
**Berkumstraat 35**
**NL-8021 BP Zwolle(NL)**

(74) Representative: **'t Jong, Bastiaan Jacobus et al**
**OCTROOIBUREAU ARNOLD & SIEDSMA**
**Sweelinckplein 1**
**NL-2517 GK 's-Gravenhage(NL)**

# Description

The invention relates to a method for the operation of a four-stroke reciprocating piston combustion engine with a supercharging compressor as defined in the introductory part of claim 1.

Such a method is known from NL-A-7 802 328.

The invention has for its object to provide a method of the kind described above by which a higher yield can be achieved of an engine operated therewith.

With the method according to the invention this is achieved with the measures of the characterizing part of claim 1. According to the invention it is possible to make better use of the potential energy in the exhaust gases at the end of the expansion in linked expansion machines, so that with respect to the whole system more shaft power can be obtained from the gases.

With the method known from NL-A-7 802 328 the pressure in the exhaust pipe can be higher than the pressure in the inlet pipe. With that method, however, this is an undesired effect and does not lead to a higher yield.

The air under high pressure can be extracted from a source comprising a separate compressor. In accordance with a preferred embodiment of the method according to the invention, the source of air under high pressure is fed with partially compressed air extracted from the cylinder during the compression stroke. In this way, an engine operated according to the method of the device can take a simpler form.

By applying the step as claimed in claim 3, the method can also be used with combustion engines of an already existing design.

The invention also relates to and provides a four-stroke reciprocating piston-combustion engine with supercharging as defined in the introductory part of claim 4. The engine according to the invention comprises a second expansion machine accommodated in the exhaust pipe and having an output shaft and means to control the engine under substantially all load conditions such that the pressure in the exhaust pipe is kept higher than the pressure in the inlet pipe.

A favourable embodiment of the engine according to the invention is obtained when an additional non-return valve is located in the inlet pipe. As a result, the moment at which the inlet valve opens becomes less critical since air from the inlet pipe can only be supplied when the pressure in the cylinder has fallen to the pressure level in the inlet pipe.

A further favourable development is obtained when the inlet valve is a poppet valve provided with a valve stem, and the valve stem and a valve guide guiding said stem slidably take the form of a sleeve valve forming the flushing air valve.

As such it is known to accommodate in the exhaust pipe of a combustion engine an expansion machine, see e.g. GB-A-560 735. In the engine shown therein, an output shaft of this expansion machine is linked to a compressor for supplying air under pressure into an inlet pipe of the engine.

The invention will now be elucidated in the following description of embodiments with reference to the annexed drawings.

Fig. 1 shows a partial section at the location of a cylinder of a combustion engine according to the invention to be operated with the method according to the invention.

Fig. 2 shows schematically the combustion engine according to Fig. 1 with compression and expansion machines coupled thereto.

Fig. 3 shows a detail of a flushing air valve combined with an inlet valve according to a variant of the invention.

The engine 1 comprises at least one cylinder 2 and a reciprocating piston 3 guided therein by means of a crank/ drive rod mechanism 4. Cylinder 2 is closed off at the top end with a cylinder head 5, in which are formed an inlet pipe 6 for the supply of air and an exhaust pipe 7 for the discharge of combustion gas. Inlet pipe 6 and exhaust pipe 7 can be opened and closed in a per se known manner in accordance with a four-stroke cycle using respectively an inlet valve 8 and an exhaust valve 9. Further accomodated in cylinder head 5 is an injector 16 which, when piston 3 is near the end of the compression stroke, can inject a quantity of fuel into the air heated by the compression, following which combustion of this fuel takes place.

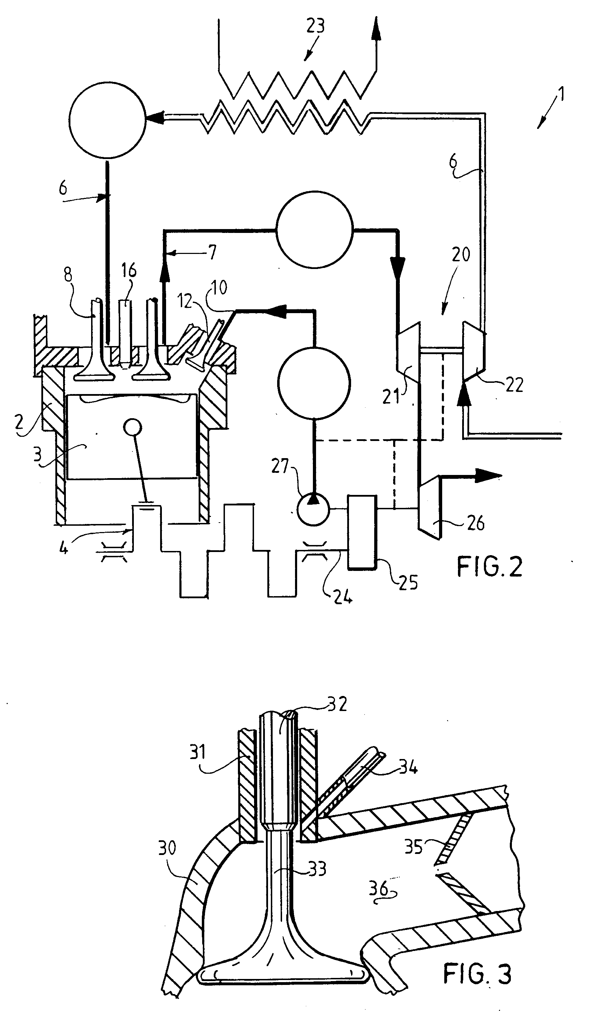

As known diagrammatically in Fig. 2, engine 1 comprises a supercharging group 20 which comprises an exhaust gas turbine 21 and an inlet air compressor 22 directly coupled to it. The inlet air is placed under pressure with inlet air compressor 22 and supplied to cylinder 2 via the intermediate cooler 23. Accommodated in exhaust pipe 7 in addition to the exhaust gas turbine 21 is another turbine 26. This turbine 26 is coupled mechanically via a transmission 25 to crankshaft 24 of engine 1. The combustion gases expanding in turbine 26 thereby generate power to crankshaft 24.

In another embodiment, turbine 26 can also be separate from engine crankshaft 24 and separately drive a device such as a pump or generator.

To obtain an optimal action of engine 1 according to the invention, the pressure in exhaust pipe 7 is kept at a higher level than the pressure generated by the inlet air compressor 22 in inlet pipe 6. In this way, a greater part of the potential energy in the combustion gases can be used with the aid of the extra turbine 26.

Residual combustion gases remaining in cylinder 2 at the end of the driving out stroke of piston 3 have a very unfavourable influence on the combustion cycle. According to the invention, these residual gases are therefore driven out of cylinder 2 into exhaust pipe 7 using flushing air from a separate source of air under high pressure. In the embodiment shown the separate source of air under high pressure is formed by a compressor 27 which is driven by crankshaft 24 via the transmission 25. This compressor 27 supplies air under a higher pressure than the pressure in exhaust pipe 7.

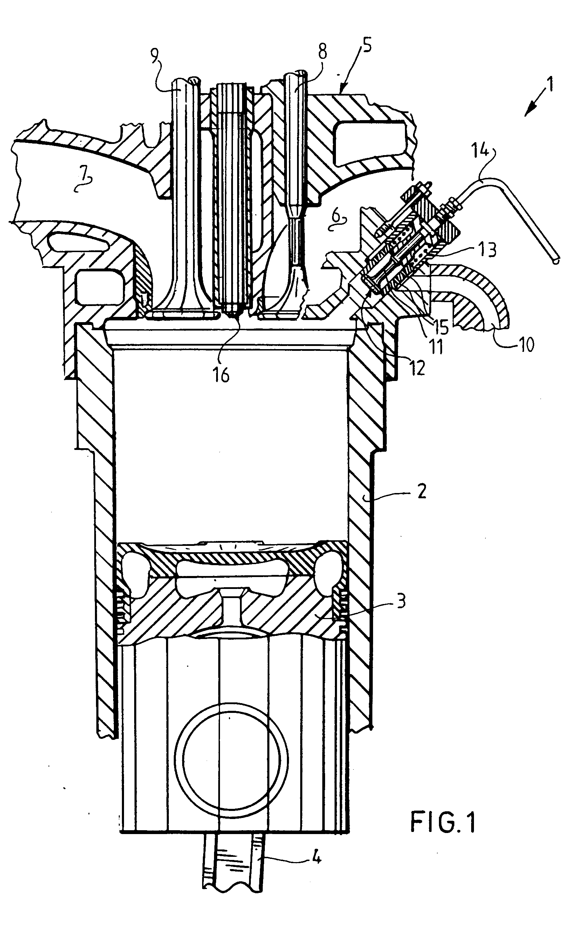

In the embodiment shown the flushing air is supplied using starting air valve 12. As shown in Fig. 1, this starting air valve 12 comprises a poppet valve connected with a piston 11, which is kept in the closed position by the loading of a spring 13. Above the piston a pressure can be supplied via control line 14 which opens valve 12 counter to the action of spring 13. In opened position, the flushing air can flow into the valve housing in cylinder 2 via flushing air pipe 10 and the channels 15. Valve 12 is controlled such that it opens at the end of the driving out stroke when exhaust valve 9 is still just open. As a result, the remaining combustion gases are driven from cylinder 2 into exhaust pipe 7 with the fresh flushing air. After closing of the exhaust valve 9 and the starting air valve 12 acting as flushing air valve, the fresh flushing air fed in can expand in cylinder 2 since piston 3 moves downward in its suction stroke. As soon as the pressure of the air in cylinder 2 has fallen to the pressure in inlet pipe 6, inlet valve 8 is opened, after which cylinder 2 is further filled with air supplied by the supercharging group.

In Fig. 2 the reservoir function of the respective pipes is schematically indicated by circles.

Although starting air valve 12 is a suitable valve for supplying the flushing air under high pressure, another embodiment may also be chosen.

Fig. 3 shows such an alternative embodiment. This Figure shows only a portion of a cylinder head 30 with an inlet pipe 36 recessed into it. This inlet pipe 36 can be closed by means of an inlet valve of which the valve stem 32 is guided slidably in longitudinal direction in valve guide 31. The valve stem is provided close to the bottom part of valve guide 31 with a narrower portion 33. Flushing air pipe 34 also runs out into valve guide 31. In the closed position of the inlet valve that is shown, the narrower portion 33 of the valve stem leaves the opening of the flushing air pipe 34 into the valve guide just open. As a result flushing air under high pressure can be introduced into inlet pipe 36 via pipe 34.

Inlet pipe 36 is provided with a non-return valve 35 which prevents the flushing air flowing back into inlet pipe 36. As soon as the inlet valve is opened, the flushing air under pressure flows into the cylinder and drives out the residual gases in the manner described. During the continuing downward stroke of the inlet valve, the thicker part of the valve stem 32 closes the opening of flushing air pipe 34 which results in no more flushing air being supplied. The control of the inlet valve and the associated exhaust valve is chosen such that this takes place at about the moment the exhaust valve closes. The fresh flushing air still present in inlet pipe 36 and in the cylinder, expands in the way described, and as soon as the pressure has fallen to the pressure generated by the inlet air compressor, non-return valve 35 opens, allowing further combustion air to flow into the cylinder. At the end of the inlet stroke, the inlet valve closes, whereby in accordance with the controlling of the inlet valve, another smaller or greater quantity of air under high pressure is supplied via flushing air pipe 34.

Fig. 2 shows that flushing air compressor 27 is driven from crankshaft 24. It is evident that this can also be driven with a separate driving motor.

According to one embodiment of the invention a quantity of air can also be taken from the cylinder during the compression stroke. This air is delivered to a reservoir via appropriately controlled valves. The valves open when, during the compression, the pressure in the cylinder is higher than the pressure in the reservoir and close when sufficient air is absorbed into the reservoir. The valve for supplying compressed air to the reservoir can be integrated in appropriate manner with the flushing air valve in the cylinder head.

## Claims

1. Method for the operation of a four-stroke reciprocating piston combustion engine (1) with a supercharging compressor, comprising the supply of air under pressure from an inlet pipe (6) into a cylinder (2) during a suction stroke of a piston (3), the compression of the air during a compression stroke, the injecting of fuel for combustion into the cylinder (2) near the end of the compression stroke, the partial expansion of combustion gas during an expansion stroke and the driving of partially expanded combustion gas out of the cylinder into an exhaust pipe (7) during a driving out stroke, supplying the partially expanded combustion gas to a first expansion machine (21) driving the supercharging compressor, whereby at the end of the driving out stroke flushing air is supplied from a separate source (27) of air under high pressure to drive out residual combustion gas into the exhaust pipe (7), characterized in that the engine (1) is controlled under substantially all load conditions such that the pressure in the exhaust pipe (7) is kept higher than the pressure in the inlet pipe (6), and that the partially expanded combustion gas is supplied to a second expansion machine (26) delivering mechanical power.

2. Method as claimed in claim 1, **characterized in that** the source of air under high pressure is fed with partially compressed air taken from the cylinder during the compression stroke.

3. Method as claimed in claim 1 or 2 for an engine provided with a starting air valve (12), **characterized in that** the flushing air is supplied through said starting air valve (12).

4. Four stroke reciprocating combustion engine comprising at least one cylinder (2), a reciprocating piston (3) guided in the cylinder (2), an inlet pipe (6) and an exhaust pipe (7) connected to the cylinder (2) at one end by way of an inlet valve (8) and an exhaust valve respectively, a first expansion machine (21) being accommodated in the exhaust pipe (7) and having an output shaft linked to an input shaft of an air compressor (22) supercharging the engine, whereby the air compressor (22) is accommodated in the inlet pipe (6), valve actuating means being arranged for actuating the inlet (8) and exhaust (9) valves synchronously with the piston movement in accordance with a four stroke process, fuel injection means for injecting fuel near the end of the compression stroke, a flushing air supply line (10) provided with a flushing air valve (12) and connected with a source (27) of air under high pressure, and control means for controlling the flushing air valve (12) synchronously with the piston movement such that at the end of the driving out stroke the air valve (12) is opened briefly while the exhaust valve (9) is still just open, characterized by a second expansion machine (26) accommodated in the exhaust pipe (7) and having an output shaft and by means to control the engine under substantially all load conditions such that the pressure in the exhaust pipe (7) is kept higher than the pressure in the inlet pipe.

5. Engine as claimed in claim 4, **characterized in that** the source of air under high pressure comprises a reservoir which is connected to the cylinder (2) by means of a supply pipe provided with a feed valve for supplying partially compressed air from said cylinder to said reservoir.

6. Engine as claimed in claim 4, **characterized in that** the flushing air valve is a starting air valve (12).

7. Engine as claimed in either of claims 5-6, **characterized in that** an additional non-return valve (35) is accommodated in the inlet pipe (36).

8. Engine as claimed in claim 7, **characterized in that** the inlet valve is a poppet valve provided with a valve stem (32) and that said valve stem and a valve guide (31) guiding said stem slidably take the form of a sleeve valve forming the flushing air valve.

**Revendications**

1. Procédé pour faire fonctionner un moteur (1) à combustion ayant un piston alternatif à quatre temps avec un compresseur de suralimentation, comprenant l'alimentation d'air sous pression à partir d'une conduite d'admission (6) dans un cylindre (2) pendant une course d'aspiration du piston (3), la compression de l'air pendant une course de compression, l'injection de carburant destiné à la combustion dans le cylindre (2) à proximité de l'extrémité de la course de compression, la détente partielle du gaz de combustion pendant une course de détente et l'entraînement du gaz de combustion partiellement détendu à l'extérieur du cylindre dans une tuyauterie d'échappement (7) pendant une course d'échappement, amenant le gaz de combustion partiellement détendu à un premier dispositif de détente (21) entraînant le compresseur de suralimentation, grâce à quoi, à l'extrémité de la course d'échappement, de l'air de balayage est alimenté à partir d'une source (27) séparée d'air sous haute pression pour entraîner le gaz de combustion résiduel vers l'extérieur dans la tuyauterie d'échappement (7), caractérisé en ce que le moteur (1) est contrôlé sensiblement sous toutes les conditions de charge de manière telle que la pression dans la tuyauterie d'échappement (7) reste plus haute que la pression dans la conduite d'admission (6) et que le gaz de combustion partiellement détendu est amené à un second dispositif (26) de détente délivrant une puissance mécanique.

**2.** Procédé selon la revendication 1, caractérisé en ce que la source d'air sous haute pression est alimentée partiellement avec de l'air comprimé pris dans le cylindre pendant la course de compression.

**3.** Procédé selon la revendication 1 ou 2, pour un moteur muni d'une soupape (12) d'air de démarrage, caractérisé en ce que l'air de balayage est alimenté à travers la soupape d'air de démarrage (12).

**4.** Moteur à combustion alternatif à quatre temps, comprenant au moins un cylindre (2), un piston alternatif (3) guidé dans le cylindre (2), une conduite d'admission (6) et une tuyauterie d'échappement (7) reliée à une extrémité du cylindre (2) par l'intermédiaire d'une soupape d'admission (8) et une soupape d'échappement respectivement, un premier dispositif de détente (21) étant agencé dans la tuyauterie d'échappement (7) et ayant un arbre de sortie couplé à un arbre d'entrée d'un compresseur (22) suralimentant le moteur, grâce à quoi le compresseur d'air (22) est logé dans la conduite d'admission (6), des moyens d'actionnement de soupape étant agencés pour actionner les soupapes d'admission (8) et d'échappement (9) de manière synchrone avec le mouvement du piston en relation avec un processus à quatre temps, des moyens injecteurs de carburant destinés à l'injection du carburant à proximité de l'extrémité de la course de compression, une conduite (10) d'alimentation d'air de balayage muni d'une soupape d'air de balayage (12) et reliée à une source (27) d'air sous haute pression, et des moyens de commande destinés à commander la soupape (12) d'air de balayage de manière synchrone avec le mouvement du piston, de manière telle qu'à l'extrémité de la course d'échappement la soupape d'air de balayage (12) est ouverte brièvement lorsque la soupape d'échappement (9) est juste ouverte, caractérisé en ce qu'un second dispositif (26) de détente est logé dans la tuyauterie d'échappement (7) et posséde un arbre de sortie et en ce qu'il comporte des moyens de commande du moteur sensiblement sous toutes les conditions de charge, tels que la pression dans la tuyauterie d'échappement (7) est maintenue plus élevée que la pression dans la conduite d'admission.

**5.** Moteur selon la revendication 4, caractérisé en ce que la source d'air sous haute pression comporte un réservoir qui est relié au cylindre (2) à l'aide d'une tuyauterie d'alimentation munie d'une soupape d'alimentation destinée à délivrer de l'air partiellement comprimé dans le cylindre vers le réservoir.

**6.** Moteur selon la revendication 4, caractérisé en ce que la soupape d'air de balayage est une soupape d'air de démarrage (12).

**7.** Moteur selon la revendication 5 ou 6, caractérisé en ce qu'une soupape (35) de non retour supplémentaire est logée dans la conduite d'admission (36).

**8.** Moteur selon la revendication 7, caractérisé en ce que la soupape d'admission est une soupape à champignon munie d'une queue (32) de soupape, et en ce que la queue de soupape et un guide de soupape (31) guidant la queue en coulissement, constituent une soupape à manchon constituant la soupape d'air de balayage.

**Patentansprüche**

**1.** Verfahren zum Betrieb einer Viertakt-Brennkraftmaschine mit einem Aufladekompressor, umfassend die unter Druck stehende Luftversorgung von einem Einlaßrohr (6) in einen Zylinder (2), während eines Ansaugtaktes eines Kolbens (3), die Verdichtung der Luft während eines Verdichtungstaktes, das Einspritzen des Kraftstoffes zum Verbrennen in den Zylinder (2) nahe dem Verdichtungstaktende, die Teilexpandierung des Verbrennungsgases während eines Expansionstaktes und das Austreiben des unvollständig expandierten Verbrennungsgases aus dem Zylinder in ein Auspuffrohr (7) während eines Entgasungstaktes, Zuführen des unvollständig expandierten Verbrennungsgases zu einer ersten Expansionsmaschine (21), die den Aufladekompressor antreibt, wobei am Ende des Entgasungstaktes Spülluft von einer separaten, unter Hochdruck stehenden Luftquelle (27) zugeführt wird, um das restliche Verbrennungsgas in das Auspuffrohr (7) auszutreiben, dadurch gekennzeichnet, daß die Maschine (1) unter im wesentlichen Vollbelastungsbedingungen gesteuert wird, so daß der Druck im Auspuffrohr (7) höher als im Einlaßrohr (6) gehalten wird, und daß das unvollständig expandierte Verbrennungsgas einer zweiten Expansionsmaschine (26) zugeführt wird, die mechanische Leistung liefert.

**2.** Verfahren nach Anspruch 1, dadurch gekennzeichnet, daß die unter Hochdruck stehende Luftquelle mit teilweise verdichteter Luft gespeist wird, die dem Zylinder während des Verdichtungstaktes entnommen wird.

**3.** Verfahren nach Anspruch 1 oder 2 für eine, mit einem Anlaßluftventil (12) versehene Maschine, dadurch gekennzeichnet, daß die Spülluft durch das Anlaßventil (12) zugeführt wird.

**4.** Viertakt-Brennkraftmaschine mit mindestens einem Zylinder (2), einem im Zylinder geführten Hubkolben (3), einem Einlaßrohr (6) und einem Auspuffrohr (7), die mit dem Zylinder (2) an einem Ende mittels eines Einlaßventils (8) bzw. eines Auslaßventils (9) verbunden sind, einer ersten Expansionsmaschine (21), die im Auspuffrohr (7) aufgenommen ist, und eine Hauptwelle aufweist, die mit einer Antriebswelle eines Luftkompressors (22) verbunden ist, der die Maschine vorverdichtet, wobei der Luftkompressor (22) im Einlaßrohr (6) aufgenommen ist, Ventilbetätigungsmitteln, die zum Betätigen des Einlaß- (8) und des Auslaßventils (9) synchron zur Kolbenbewegung angeordnet sind, entsprechend einem Viertaktverfahren, Kraftstoffeinspritzmitteln zum Einspritzen von Kraftstoff nahe dem Verdichtungstaktende, eine Spülluftzufuhrleitung (10), die mit einem Spülluftventil (12) versehen ist und mit einer unter Hochdruck stehenden Luftquelle (27) verbunden ist, und Steuermittel zum Steuern des Spülluftventils (12) synchron mit der Kolbenbewegung, derart, daß am Ende des Entgasungstaktes das Luftventil (12) kurz geöffnet wird, während das Auslaßventil (9) gerade noch offen ist, gekennzeichnet durch eine zweite Expansionsmaschine (26), die in dem Auspuffrohr (7) aufgenommen ist und eine Hauptwelle aufweist, und durch Mittel zum Steuern der Maschine unter im wesentlichen Belastungsbedingungen, so das der Druck im Auspuffrohr (7) höher als der Druck im Einlaßrohr gehalten wird.

**5.** Maschine nach Anspruch 4, dadurch gekennzeichnet, daß die unter Hochdruck stehende Luftquelle einen Behälter aufweist, welcher mit dem Zylinder (2) über ein Zuflußrohr verbunden ist, das mit einem Speiseventil zum Zuführen von teilweise verdichteter Luft vom Zylinder zum Behälter versehen ist.

**6.** Maschine nach Anspruch 4, dadurch gekennzeichnet, daß das Spülluftventil ein Anlaßluftventil (12) ist.

**7.** Maschine nach beiden der Ansprüche 5 und 6, dadurch gekennzeichnet, daß ein zusätzliches Rückschlagventil im Einlaßrohr (36) untergebracht ist.

**8.** Maschine nach Anspruch 7, dadurch gekennzeichnet, daß das Einlaßventil ein Tellerventil ist, welches mit einer Ventilstange (32) versehen ist, und daß die Ventilstange (32) und eine Ventilführung (31), die die Stange verschiebbar führt, die Form eines Hülsenschiebers annehmen, der das Spülluftventil bildet.

FIG.1

FIG.2

FIG. 3